# EUROPÄISCHE PATENTSCHRIFT

(11) **EP 2 734 302 B1**
(45) Veröffentlichungstag und Bekanntmachung des Hinweises auf die Patenterteilung: **20.04.2016**
(21) Anmeldenummer: 12740310.3
(22) Anmeldetag: 13.07.2012
(51) Int. Cl.: B02C 7/12, D21D 1/30, B29B 17/02

(54) **VERFAHREN ZUM ENTFERNEN VON VERUNREINIGUNGEN AUF KUNSTSTOFFSCHNIPSELN**
METHOD FOR REMOVING IMPURITIES FROM SHREDDED PLASTIC
PROCÉDÉ DE SUPPRESSION D'IMPURETÉS PRÉSENTES SUR DES COPEAUX DE MATIÈRE PLASTIQUE

(30) Priorität: 21.07.2011 DE 102011108062
(43) Veröffentlichungstag der Anmeldung: 28.05.2014
(73) Patentinhaber: CVP Clean Value Plastics GmbH, 21079 Hamburg (DE)
(72) Erfinder: HOFMANN, Michael, 20146 Hamburg (DE); GERCKE, Alexander, 23843 Bald Oldesloe (DE); WERMTER, Carsten, 20149 Hamburg (DE)
(74) Vertreter: Hauck Patentanwaltspartnerschaft mbB
(86) Internationale Anmeldenummer: PCT/EP2012/002944
(87) Internationale Veröffentlichungsnummer: WO 2013/010654

(56) Entgegenhaltungen:
- EP-A1- 2 077 352
- EP-B9- 1 868 786
- US-A- 1 744 226
- US-A- 4 712 745

## Beschreibung

Die Erfindung betrifft ein Verfahren zum Entfernen von Verunreinigungen auf Kunststoffschnipseln mit einer Vorrichtung zum Entfernen von Verunreinigungen auf Kunststoffschnipseln, umfassend eine erste Reinigungsscheibe mit einer ersten Reinigungsfläche und eine zweite Reinigungsscheibe mit einer zweiten Reinigungsfläche, wobei die Reinigungsflächen einander gegenüberliegen und zwischen sich einen Reinigungsspalt begrenzen, weiter umfassend eine Antriebseinrichtung, mit der zumindest eine der Reinigungsscheiben um ihre Rotationsachse drehbar ist und eine Zuführeinrichtung, mit der Kunststoffschnipsel zwischen die Reinigungsscheiben zuführbar sind.

Kunststoffabfälle, beispielsweise PET-Getränkeflaschen, Blisterverpackungen aus PET (tiefgezogene PET-Folien), Kunststoffabfälle aus Polyolefinen oder ähnliches, müssen im Zuge eines Recyclings gereinigt werden. Dabei sind sehr hohe Qualitätsanforderungen zu erfüllen. Zulässige Verunreinigungen bewegen sich im ppm Bereich. Für die Reinigung werden die Kunststoffabfälle zunächst zu Kunststoffschnipseln, insbesondere sogenannten Kunststoffflakes, zerkleinert. Voraussetzung für den Reinigungsprozess und die kontinuierliche Beschickung einer Reinigungsanlage sind optimal vorzerkleinerte Kunststoffschnipsel. Insbesondere sollten die Kunststoffschnipsel möglichst gleichmäßig mit einem geringen Feinanteil erzeugt werden. Es ist bekannt, hierfür einen Schredder (Rotor mit Messern und Gegenmessern und Siebkorb) einzusetzen. Über den Lochdurchmesser in dem Siebkorb wird die erzeugte Flakegröße beeinflusst. Die Abtrennung von Metallen von den Kunststoffabfällen erfolgt in einer Vorsortierung mittels Magnet- und Wirbelstromabscheidern. Es ist Stand der Technik, dass vor der Zerkleinerung der Kunststoffabfälle eine Sortierung nach Farben und/oder Kunststoffarten erfolgt. Dies ist aufgrund der Verschmutzung der Kunststoffabfälle jedoch mit Einschränkungen verbunden, da die Erkennungsrate bei verschmutzen Stoffen geringer als bei sauberen ist. Weiterhin müssen bei einer Sortierung vor der Reinigung dann mehrere Waschstraßen betrieben werden, um die einzelnen Fraktionen zu reinigen. Es ist jedoch auch möglich, zunächst Kunststoffabfälle unterschiedlicher Farben und/oder unterschiedlicher Kunststoffarten vorzuzerkleinern, anschließend zu reinigen und die Sortierung nach Farben und/oder Kunststoffarten erst am Ende des Prozesses mittels einer Farberkennung bzw. einer NIR, Laser, oder Röntgenspektroskopie durchzuführen. Dies kann in einem Auflichtprozess und/oder einem Durchlichtprozess mit geeigneter optischer Detektoreinrichtung (Kamera) erfolgen.

Beim Recycling von Kunststoffflakes, insbesondere PET-Flakes, müssen folgende Anforderungen erfüllt werden:
1. Abtrennen von Folien- und Zellstoffetiketten
2. Abtrennen der Zellstoffe
3. Reinigung der Flakes von Verschmutzungen durch Inhaltsstoffe (beispielsweise Getränkereste)
4. Reinigung der Flakes von anhaftenden Verschmutzungen (beispielsweise Klebstoffe von Etiketten)
5. Abtrennen von Metallen (beispielsweise Weißblech und Aluminiumdosen)
6. Abtrennen von Fremdkunststoffen
7. Sortieren nach Farben (z.B. PET-klar und PET-bunt).

Ähnliche Anforderungen (allerdings mit höheren Grenzwerten) gelten für das werkstoffliche Recycling von Kunststoffen. Allerdings entfällt im Regelfall die Sortierung nach Farben.

Aus WO 2008/058750 A2 ist ein Verfahren zum Abtrennen von Zellstoffen und anderen anhaftenden Stoffen beim Recycling von Abfallkunststoff, insbesondere Mischkunststoff, bekannt. Zum Einsatz kann eine Zahnscheibenmühle kommen, deren Scheiben ineinander greifende Zähne aufweisen, die beabstandet auf konzentrischen Kreisen angeordnet sind. Zwischen den Zähnen eines Kreises sind die Lücken so groß, dass Stücke aus dickerem oder festerem Material frei hindurch treten können. Eine Scheibenmühle ist auch bekannt aus DE 10 2005 013 693 A1.

Aus EP 2 077 352 A1 ist eine Refinerscheibe eines mechanischen Refiners bekannt, deren Oberfläche Rippen und Nuten aufweist, wobei die führende Kante der Rippen einen inneren Winkel zwischen 140° und 175° besitzt.

Das Dokument EP 2 077 352 offenbart eine Vorrichtung umfassend eine erste Reinigungsscheibe mit einer ersten Reinigungsfläche und eine zweite Reinigungsscheibe mit einer zweiten Reinigungsfläche, wobei die Reinigungsflächen einander gegenüberliegen und zwischen sich einen Reinigungsspalt begrenzen, weiter umfassend eine Antriebseinrichtung, mit der zumindest eine der Reinigungsscheiben um ihre Rotationsachse drehbar ist und eine Zufuhreinrichtung, mit der Kunststoffschnipsel zwischen die Reinigungsscheiben zuführbar sind, wobei die Reinigungsflächen der Reinigungsscheiben jeweils eine Mehrzahl von sich zwischen einem inneren und einem äußeren Rand der Reinigungsflächen erstreckenden Reinigungsrippen aufweisen, wobei zumindest eine Flanke der Reinigungsrippen gegenüber der Axialrichtung der jeweiligen Reinigungsscheibe geneigt oder gekrümmt ist, und wobei zwischen zumindest einigen zueinander benachbarten Reinigungsrippen mehrere quer zur Erstreckungsrichtung der Reinigungsrippen verlaufende Reinigungsstege angeordnet sind.

Ein Verfahren zum Entfernen von Verunreinigungen auf Kunststoffschnipseln ist in EP 2 077 352 A1 nicht offenbart. Weiterhin ist aus US 4 712 745 A ein Refiner bekannt, mit dem Holzschnipsel aufgefasert werden.

In der Praxis wird nicht immer eine ausreichende Reinigung der Kunststoffabfälle von Verunreinigungen erreicht. Dies gilt insbesondere für die Reinigung von flachen Kunststoffschnipseln. Bei solchen flachen Kunststoffschnipseln oder -flakes kann es im Zuge der Reinigung zu einem Falten kommen, so dass nur die außen liegenden Oberflächen gereinigt werden, während die Innenseiten verschmutzt bleiben.

Ausgehend von dem oben erläuterten Stand der Technik liegt der Erfindung die Aufgabe zugrunde, ein Verfahren der eingangs genannten Art bereitzustellen, mit denen eine bessere Reinigung von Kunststoffschnipseln erreicht wird.

Die Erfindung löst diese Aufgabe durch den Gegenstand von Anspruch 1. Vorteilhafte Ausgestaltungen finden sich in den abhängigen Ansprüchen, der Beschreibung und den Figuren.

Die Erfindung löst diese Aufgabe durch ein Verfahren zum Entfernen von Verunreinigungen auf Kunststoffschnipseln unter Verwendung einer Vorrichtung zum Entfernen von Verunreinigungen auf Kunststoffschnipseln, umfassend eine erste Reinigungsscheibe mit einer ersten Reinigungsfläche und eine zweite Reinigungsscheibe mit einer zweiten Reinigungsfläche, wobei die Reinigungsflächen einander gegenüberliegen und zwischen sich einen Reinigungsspalt begrenzen, weiter umfassend eine Antriebseinrichtung, mit der zumindest eine der Reinigungsscheiben um ihre Rotationsachse drehbar ist und eine Zuführeinrichtung, mit der Kunststoffschnipsel zwischen die Reinigungsscheiben zuführbar sind, wobei die Reinigungsflächen der Reinigungsscheiben jeweils eine Mehrzahl von sich zwischen einem inneren und einem äußeren Rand der Reinigungsflächen erstreckenden Reinigungsrippen aufweisen, wobei zumindest eine Flanke der Reinigungsrippen gegenüber der Axialrichtung der jeweiligen Reinigungsscheibe geneigt oder gekrümmt ist, zwischen zumindest einigen zueinander benachbarten Reinigungsrippen mehrere quer zur Erstreckungsrichtung der Reinigungsrippen verlaufende Reinigungsstege angeordnet sind, die Reinigungsstege der ersten und/oder zweiten Reinigungsscheibe in radialer Richtung der Reinigungsscheiben jeweils rampenartig ansteigen und die Reinigungsstege der ersten Reinigungsscheibe eine geringere Höhe besitzen als die Reinigungsrippen der ersten Reinigungsscheibe und/oder dass die Reinigungsstege der zweiten Reinigungsscheibe eine geringere Höhe besitzen als die Reinigungsrippen der zweiten Reinigungsscheibe, wobei bei dem Verfahren mindestens eine Reinigungsscheibe mittels der Antriebseinrichtung um ihre Rotationsachse drehend angetrieben wird, bei dem mittels der Flüssigkeitszuführeinrichtung Flüssigkeit, insbesondere Wasser oder eine wässrige Lösung, in den Reinigungsspalt zugeführt wird, bei dem mittels der Zuführeinrichtung Kunststoffschnipsel in den Reinigungsspalt zugeführt werden und bei dem die Kunststoffschnipsel durch den Reinigungsspalt gefördert werden. Die Förderung der Kunststoffschnipsel durch den Reinigungsspalt geschieht dabei aufgrund der Relativdrehung der Reinigungsscheiben zueinander und dem Zuführen von Flüssigkeit.

Wie eingangs erläutert, dient die erfindungsgemäß verwendete Vorrichtung der Reinigung von Kunststoffschnipseln. Wie ebenfalls eingangs erläutert, fallen die Kunststoffschnipsel bei der Zerkleinerung von Kunststoffabfall, beispielsweise Kunststoffverpackungen wie Getränkeflaschen oder ähnliches an. Die Kunststoffschnipsel sind vorzerkleinerte flächige Kunststoffabfälle, die in Form von Flakes (dünnwandige Hartkunststoffe, Folien etc.) oder in Form von stückigen Kunststoffen (dickwandige Hartkunststoffe) mit einer weitgehend definierten Größe vorliegen können. Wie weiterhin eingangs erläutert, können die zu entfernenden Verunreinigungen, insbesondere Oberflächenanhaftungen sein, zum Beispiel Zellstoffreste, Klebereste, Etikettenreste oder organische Verschmutzungen.

Die erfindungsgemäß verwendete Vorrichtung besitzt eine erste und zweite Reinigungsscheibe. Die erste und zweite Reinigungsscheibe können jeweils eine (hohl-)zylindrische Grundform besitzen. Die einander gegenüberliegenden Reinigungsflächen können jeweils kreisringförmig sein. Die Reinigungsscheiben können übereinander angeordnet sein, so dass die Reinigungsflächen jeweils in einer horizontalen Ebene liegen. Die Rotationsachse der zumindest einen drehbar angetriebenen Reinigungsscheibe kann gleichzeitig ihre Symmetrieachse sein. Die Rotationsachse kann in vertikaler Richtung verlaufen. Der Antrieb kann ein elektrischer Antrieb sein. Die Zuführeinrichtung kann die Kunststoffschnipsel zentral zwischen die Reinigungsscheiben einbringen. Sie können dann durch den Reinigungsspalt hindurch von innen nach außen gefördert werden, dabei gereinigt werden und außen aus dem Reinigungsspalt ausgebracht werden.

Die Reinigungsscheiben der erfindungsgemäß verwendeten Vorrichtung weisen Reinigungsrippen auf, die zwischen dem inneren und dem äußeren Rand der Reinigungsflächen bzw. der Reinigungsscheiben verlaufen. Die Rippen können insbesondere durchgehend, also ohne Unterbrechungen in ihrer Erstreckungsrichtung, ausgebildet sein. Sofern die Reinigungsflächen bzw. Reinigungsscheiben im Bereich ihres Zentrums geschlossen sind, verlaufen die Reinigungsrippen zwischen dem Zentrum und einem äußeren Rand der Reinigungsflächen bzw. Reinigungsscheiben. Die Reinigungsrippen können einen geraden Verlauf besitzen oder gekrümmt sein. Sie können weiterhin in radialer Richtung über die jeweilige Reinigungsfläche verlaufen. Es ist jedoch auch möglich, dass sie gegenüber der radialen Richtung geneigt oder gekrümmt sind. Mindestens eine der Flanken der Reinigungsrippen ist erfindungsgemäß gegenüber der Symmetrieachse bzw. Drehachse der jeweiligen Reinigungsscheibe gekrümmt oder geneigt. Die entsprechenden Flanken können also jeweils in einer ebenen oder in einer gekrümmten Fläche liegen. Wie erläutert, können die Achsen der Reinigungsscheiben jeweils in vertikaler Richtung verlaufen. Es ist dabei auch möglich, dass beide Flanken der Reinigungsrippen gegenüber der Symmetrieachse der jeweiligen Reinigungsscheibe gekrümmt oder geneigt sind. Weiterhin sind zwischen zumindest einigen, insbesondere sämtlichen, benachbart zueinander verlaufenden Reinigungsrippen erfindungsgemäß Reinigungsstege angeordnet. Sie verlaufen quer zur Erstreckungsrichtung der Reinigungsrippen. Sie können senkrecht zur Erstreckungsrichtung der Reinigungsrippen verlaufen. Sie können aber auch in einer Richtung quer zur Erstreckungsrichtung der Reinigungsrippen verlaufen, die einen kleineren oder größeren Winkel als 90° zur Erstreckungsrichtung der Reinigungsrippen besitzt.

Die Reinigungsstege der ersten und/oder zweiten Reinigungsscheibe steigen in radialer Richtung der Reinigungsscheiben jeweils rampenartig an, also insbesondere von innen nach außen. Dies führt zu einem besonders wirksamen Einziehen der Kunststoffschnipsel in dem Bearbeitungsbereich zwischen den Reinigungsscheiben. Weiterhin besitzen die Reinigungsstege der ersten Reinigungsscheibe eine geringere Höhe als die Reinigungsrippen der ersten Reinigungsscheibe und/oder die Reinigungsstege der zweiten Reinigungsscheibe besitzen eine geringere Höhe als die Reinigungsrippen der zweiten Reinigungsscheibe. Dadurch werden die Kunststoffschnipsel materialschonender zwischen den Reinigungsscheiben bearbeitet, da nicht an jedem Reinigungssteg sämtliche Schnipsel zwischen die Scheiben gezwungen werden. Insbesondere können Flakes, die eine größerer Wandstärke als der Reinigungsspalt zwischen den Reinigungsrippen aufweisen, durch die sich ergebene Lücke hindurch gleiten, ohne dass sie von den Reinigungsrippen zerrieben werden.

Bei dem erfindungsgemäßen Verfahren werden vorzerkleinerte Kunststoffabfälle in Form von Kunststoffschnipseln (Flakes) in die Vorrichtung gegeben. Die Reinigung der Kunststoffschnipsel erfolgt durch gezielte Friktion der Scheiben in der oben beschriebenen Weise, wobei der Grad der Friktion durch eine Regelung des Reinigungsscheibenabstands einstellbar ist. Es wird dabei eine Suspension erzeugt, deren Bestandteile die zugeführte Flüssigkeit, beispielsweise Wasser, die gereinigten Kunststoffschnipsel und von diesen abgeriebene Stoffe sind (beispielsweise Kleber, Zellstoff, Etiketten, organische Verschmutzungen usw.). Nach der Reinigung erfolgt ein Trennen der Suspension mit den Verunreinigungen von den gereinigten Kunststoffschnipseln.

Der Erfindung liegt die Erkenntnis zugrunde, dass es bei der Aufbereitung von Kunststoffschnipseln, insbesondere von Kunststoffflakes, entscheidend ist, dass die Reinigung der Kunststoffschnipsel ohne eine starke mechanische Beanspruchung durch Stauchung bzw. Deformation erfolgt. Durch die Reduzierung der mechanischen Beanspruchung (Stauchung) wird eine bessere Reinigung der Kunststoffschnipsel erreicht. Insbesondere wird ein Falten oder Knäueln der Kunststoffschnipsel vermieden. Die mit den Verunreinigungen behafteten Oberflächen der Kunststoffschnipsel bleiben somit für die Reinigung zugänglich. Außerdem haben glatte Kunststoffschnipsel eine höhere Schüttdichte und neigen nicht zu einer Verzahnung, so dass ihre Förderfähigkeit verbessert ist. Darüber hinaus lassen sich glatte Kunststoffschnipsel besser sortieren, insbesondere in Sortiervorrichtungen, in denen die Kunststoffschnipsel schwerkraftbedingt von oben nach unten fallen. So bildet sich bei glatten Kunststoffschnipseln ein einheitlicher "Kunststoffschnipselvorhang". Schließlich wird durch die Verringerung der mechanischen Beanspruchung die Erzeugung von Feinanteil vermieden.

Es hat sich gezeigt, dass die erfindungsgemäße Geometrie der Reinigungsscheiben, insbesondere die Neigung bzw. Krümmung mindestens einer der Flanken der Reinigungsrippen, zu einer solchen geringeren mechanischen Beanspruchung führt. Bei der erfindungsgemäßen Geometrie der Reinigungsscheiben werden die Kunststoffschnipsel zwischen die Scheiben, insbesondere zwischen die Reinigungsrippen, gezogen. Ein Knicken bzw. Falten oder Knäueln der Kunststoffschnipsel wird vermieden. Zwischen den Reinigungsscheiben liegt somit im Idealfall eine Ein-Kom-Schicht der Kunststoffschnipsel vor, so dass diese optimal von Oberflächenverunreinigungen gereinigt werden können. Die Oberfläche der Reinigungsrippen erzeugt dabei die erforderliche Friktion zur Reinigung der Kunststoffschnipsel. Insbesondere werden die Kunststoffschnipsel bei der erfindungsgemäßen Reinigungsscheiben-Geometrie im Wesentlichen vollflächig angeschliffen, wodurch sämtliche anhaftenden Verschmutzungen abgelöst werden. Das Zugeben von Chemikalien, beispielsweise Natron-Lauge, wie beim Stand der Technik für die Reinigung oftmals erforderlich, ist erfindungsgemäß nicht notwendig. Vielmehr führt die erfindungsgemäße Geometrie der Reinigungsscheiben bzw. der Reinigungsflächen zu einer ausreichenden Reinigung der Kunststoffschnipsel, ohne dass es dabei zu einer Zerkleinerung der Kunststoffschnipsel kommt bzw. kommen muss.

Weiterhin erfolgt bei der erfindungsgemäßen Geometrie ein leichtes Recken der Kunststoffschnipsel, so dass diese glatt gezogen werden und gegebenenfalls gefaltete Kunststoffschnipsel (beispielsweise aus einer Vorzerkleinerung) wieder aufgefaltet werden. Es hat sich insbesondere gezeigt, dass bei der erfindungsgemäßen Vorrichtung der Hauptteil der Friktion zum Abschleifen und damit Reinigen der Kunststoffschnipsel im Bereich der schrägen bzw. gekrümmten Flanken der Reinigungsrippen erfolgt. Wie erwähnt, muss die entsprechende Flanke dazu nicht zwangsweise in einer planen Ebene liegen. Vielmehr kann eine gekrümmte Flanke vorliegen, so dass ein weicher Übergang zur Scheitelfläche erreicht wird. Wichtig ist, dass eine ausreichend große Friktionsfläche der Reinigungsrippen vorhanden ist, so dass ein ausreichender Reinigungseffekt entsteht. Die in den Kanälen zwischen den Reinigungsrippen erfindungsgemäß angeordneten Reinigungsstege wirken als Barrieren und zwingen die Kunststoffschnipsel zwischen die Reinigungsscheiben, insbesondere zwischen die Reinigungsrippen der Reinigungsscheiben.

Das mit der Erfindung erreichte gezielte Anschleifen der Kunststoffschnipsel hat neben der Reinigung noch einen weiteren vorteilhaften Effekt. So werden die Kunststoffschnipsel mit einer matten Oberfläche ausgestattet, die Licht weniger stark reflektiert. Dies erleichtert eine optische Sortierung der Kunststoffschnipsel nach dem Reinigungsprozess. Gerade bei optischen Sortiervorrichtungen, die nach dem Auflichtverfahren zur Farberkennung arbeiten, ist eine stark glänzende und damit reflektierende Oberfläche nachteilig. Durch das erfindungsgemäße Anschleifen der Kunststoffschnipsel wird also eine bessere Erkennung der Kunststoffschnipsel erreicht.

Es sei noch erwähnt, dass die erfindungsgemäßen Kunststoffschnipsel insbesondere flächige Kunststoffteilchen sind. Insbesondere bei Kunststoff mit einer geringen Zähigkeit, beispielsweise HDPE, können zu einem gewissen Anteil auch dickere Kunststoffteilchen enthalten sein, die mit der erfindungsgemäßen Vorrichtung gereinigt werden.

Die in der erfindungsgemäßen Weise ausgestalteten Reinigungsscheiben mit den durch die schrägen bzw. gekrümmten Flanken relativ breiten Reinigungsrippen verschleißen im Betrieb weniger schnell als konventionelle Reinigungsscheiben. Darüber hinaus führt die erfindungsgemäße Anordnung der schrägen bzw. gekrümmten Flanken der Reinigungsrippen zusammen mit der relativen Drehbewegung zwischen den Reinigungsscheiben zu einer Pumpwirkung. Die zu reinigenden Kunststoffschnipsel werden allein aufgrund der Geometrie der Reinigungsscheiben und der relativen Drehbewegung durch den Reinigungsspalt hindurch gefördert und gereinigt. Auf eine Feststoffpumpe mit einem dazugehörigen Pumpensumpf, wie diese beim Stand der Technik häufig vorgesehen ist, kann daher verzichtet werden.

Nach einer weiteren Ausgestaltung kann vorgesehen sein, dass zu reinigende Kunststoffschnipsel vor dem Zuführen zwischen die Reinigungsscheiben und dem Fördern durch den Reinigungsspalt der für das Entfernen von Verunreinigungen eigentlich vorgesehenen Vorrichtung in einer Vorreinigungsvorrichtung einer Vorreinigung unterzogen werden. Die Vorreinigungsvorrichtung besitzt dabei eine erste Reinigungsscheibe mit einer ersten Reinigungsfläche und eine zweite Reinigungsscheibe mit einer zweiten Reinigungsfläche, wobei die Reinigungsflächen einander gegenüberliegen und zwischen sich einen Reinigungsspalt begrenzen, der größer ist als der Reinigungsspalt der anschließend zum Entfernen von Verunreinigungen auf den Kunststoffschnipseln verwendeten Vorrichtung. Wie bei der der Vorreinigung nachfolgenden Hauptreinigung kann dabei mindestens eine der Reinigungsscheiben um ihre Rotationsachse gedreht werden, Flüssigkeit, insbesondere Wasser oder eine wässrige Lösung, kann in den Reinigungsspalt der Vorreinigungsvorrichtung zugeführt werden und die zu reinigenden Kunststoffschnipsel können zwischen die Reinigungsscheiben der Vorreinigungsvorrichtung zugeführt und durch den Reinigungsspalt gefördert werden. Es erfolgt also ein zweistufiger Reinigungsprozess.

Im Grundsatz kann die Vorreinigungsvorrichtung weitgehend identisch zu der anschließend verwendeten Hauptreinigungsvorrichtung ausgebildet sein. Sie kann allerdings kleiner dimensioniert werden. Indem der Reinigungsspalt der Vorreinigungsvorrichtung größer ist als der der Hauptreinigungsvorrichtung kann erreicht werden, dass nur eine geringe oder im Wesentlichen gar keine abrasive Bearbeitung der Kunststoffschnipsel erfolgt. Insbesondere kann vorgesehen sein, dass der Reinigungsspalt der Vorreinigungsvorrichtung durch Einstellung des Abstands der Reinigungsscheiben so gewählt wird, dass im Zuge der Vorreinigung von den Kunststoffschnipseln entfernte Verunreinigungen, beispielsweise entfernte Zellstoffe, im Wesentlichen nicht zerstört werden. Dies erleichtert die anschließende Reinigung der Kunststoffschnipsel in der Hauptreinigungsvorrichtung erheblich.

Es ist auch möglich, dass zu reinigende Kunststoffschnipsel vor dem Zuführen zwischen die Reinigungsscheiben und dem Fördern durch den Reinigungsspalt der Vorrichtung in einer Vorreinigungsvorrichtung einer Vorreinigung unterzogen werden, wobei die Vorreinigungsvorrichtung einen Reinigungshohlzylinder mit einer ersten Reinigungsfläche an seiner zylindrischen Innenfläche und einen in dem Reinigungshohlzylinder angeordneten Reinigungszylinder mit einer zweiten Reinigungsfläche an seiner zylindrischen Außenfläche umfasst, wobei die Reinigungsflächen zwischen sich einen Reinigungsspalt begrenzen, der größer ist als der Reinigungsspalt der anschließend zum Entfernen von Verunreinigungen auf den Kunststoffschnipseln verwendeten Vorrichtung. Dabei werden der Reinigungshohlzylinder und/oder der Reinigungszylinder drehend angetrieben. Der Reinigungsspalt der Vorreinigungsvorrichtung kann dann wiederum durch Einstellung des Abstands zwischen dem Reinigungshohlzylinder und dem Reinigungszylinder so gewählt werden, dass im Zuge der Vorreinigung von den Kunststoffschnipseln entfernte Verunreinigungen im Wesentlichen nicht zerstört werden.

Schließlich ist es auch möglich, dass zu reinigende Kunststoffschnipsel vor dem Zuführen zwischen die Reinigungsscheiben und dem Fördern durch den Reinigungsspalt der Vorrichtung in einer Vorreinigungsvorrichtung einer Vorreinigung unterzogen werden, wobei die Vorreinigungsvorrichtung einen Reinigungshohlkegel mit einer ersten Reinigungsfläche an seiner kegelförmigen Innenfläche und einen in dem Reinigungshohlkegel angeordneten Reinigungskegel mit einer zweiten Reinigungsfläche an seiner kegelförmigen Außenfläche umfasst, wobei die Reinigungsflächen zwischen sich einen Reinigungsspalt begrenzen, der größer ist als der Reinigungsspalt der anschließend zum Entfernen von Verunreinigungen auf den Kunststoffschnipseln verwendeten Vorrichtung. Dabei werden der Reinigungshohlkegel und/oder der Reinigungskegel drehend angetrieben. Dabei kann der Reinigungsspalt der Vorreinigungsvorrichtung wiederum durch Einstellung des Abstands zwischen dem Reinigungshohlkegel und dem Reinigungskegel so gewählt werden, dass im Zuge der Vorreinigung von den Kunststoffschnipseln entfernte Verunreinigungen im Wesentlichen nicht zerstört werden.

Bei allen der vorgenannten drei alternativen Ausgestaltungen kann insbesondere sichergestellt werden, dass im Zuge der Vorreinigung von den Kunststoffschnipseln entfernte Verunreinigungen, wie Zellstoffe, im Wesentlichen nicht zerstört werden, also als intakte Struktur (z.B. Zellstofffaser) vorliegen. Diese können dann in einfacher Weise anschließend mittels Filtration und/oder Siebung aus der Prozessflüssigkeit, insbesondere dem Prozesswasser, entfernt werden. Werden Verunreinigungen dagegen zu stark zerstört (z.B. Zellstofffasern zu stark aufgemahlen), sind diese nur noch mit aufwendigen Prozesswasserreinigungsmethoden entfernbar.

Die geneigten oder gekrümmten Flanken der Reinigungsrippen der ersten und/oder zweiten Reinigungsscheibe können die bei einer Drehung der mindestens einen Reinigungsscheibe vorlaufenden Flanken sein. Bei der nicht drehend angetriebenen Reinigungsscheibe ist die vorlaufende Flanke der Reinigungsrippen die im Zuge der Relativdrehung zwischen den Reinigungsscheiben vorlaufende Flanke. Durch diese Ausgestaltung werden das erfindungsgemäße Anschleifen der Kunststoffschnipsel und damit die erfindungsgemäße Reinigung in besonders effektiver Weise durchgeführt.

Der Grad der erfindungsgemäßen Neigung bzw. Krümmung der Flanken hängt entscheidend von der Art des zu reinigenden Kunststoffes, der Form der Kunststoffschnipsel und der Größenverteilung innerhalb der zu reinigenden Kunststoffschnipselmenge ab. Entscheidend ist jeweils, dass eine Zerkleinerung bzw. Stauchung der Kunststoffschnipsel möglichst nicht eintritt. Gleichzeitig müssen die Kunststoffschnipsel einer für die Reinigung ausreichenden Friktion unterworfen werden. Daher muss zwischen den einander zugewandten Flanken benachbarter Reinigungsrippen ausreichend Platz zur Aufnahme der zu reinigenden Kunststoffschnipsel bestehen. Bei flachen Kunststoffschnipseln sind dabei Flanken mit einem großen Neigungswinkel bzw. Krümmungswinkel gegenüber der Axialrichtung geeignet. Insbesondere werden die Kunststoffschnipsel bei einer flach ansteigenden Flanke besonders gut zwischen die Reinigungsscheiben gezogen. Außerdem steht eine große Abriebfläche zur Verfügung, so dass ein besonders guter Reinigungseffekt erzielt wird. Bei stückigen Kunststoffschnipseln ist dagegen ein kleinerer Neigungswinkel bzw. Krümmungswinkel gegenüber der Axialrichtung geeignet. Es ist beispielsweise möglich, dass die geneigten Flanken der Reinigungsrippen der ersten und/oder zweiten Reinigungsscheibe jeweils einen Neigungswinkel von mindestens 10°, vorzugsweise mindestens 30%, weiter vorzugsweise mindestens 45°, gegenüber der Axialrichtung der jeweiligen Reinigungsscheibe besitzen. Sofern die Flanken der Reinigungsrippen gekrümmt sind, kann vorgesehen sein, dass, in einer Schnittebene senkrecht zur Erstreckungsrichtung der Reinigungsrippen der ersten und/oder zweiten Reinigungsscheibe gesehen, eine den Beginn und das Ende der gekrümmten Flanken verbindende Linie einen Neigungswinkel von mindestens 10°, vorzugsweise mindestens 30%, weiter vorzugsweise mindestens 45°, gegenüber der Axialrichtung der jeweiligen Reinigungsscheibe besitzt. Obergrenzen für die genannten Winkel können beispielsweise mindestens 45°, vorzugsweise mindestens 60°, weiter vorzugsweise mindestens 80° sein.

Weiterhin können die Reinigungsrippen der ersten und/oder zweiten Reinigungsscheibe in einer Umlaufrichtung um das Zentrum der jeweiligen Reinigungsscheibe oder der jeweiligen Reinigungsfläche (jeweils) ein Sägezahnprofil bilden. Die Reinigungsrippen können in Umlaufrichtung, also beispielsweise entlang einer oder mehrerer kreisförmiger oder anderweitiger Bahnen mit unterschiedlichen Radii um das Zentrum der Reinigungsscheibe bzw. der Reinigungsfläche im Schnitt ein Sägezahnprofil bilden. Sie können also in Umlaufrichtung gesehen im Wesentlichen direkt ineinander übergehen. Hierdurch werden (horizontale) Bodenflächen zwischen benachbarten Reinigungsrippen vermieden, in denen sich Kunststoffschnipsel unerwünscht ansammeln könnten.

Weiterhin können die Reinigungsrippen der ersten und/oder zweiten Reinigungsscheibe zumindest im Übergang zwischen Ihrer mindestens einen geneigten oder gekrümmten Flanke und ihrer Scheitelfläche abgerundet sein. Weiterhin können die Reinigungsrippen der ersten und/oder zweiten Reinigungsscheibe eine horizontale Scheitelfläche besitzen. Selbstverständlich können die Reinigungsrippen auch im Übergang zu einer gegebenenfalls nicht geneigten oder nicht gekrümmten zweiten Flanke abgerundet sein. Indem an dem Übergang zwischen der Flanke und der Scheitelfläche keine scharfe Kante, insbesondere kein scharfer Grat, gebildet ist, wird ein Aufkräuseln der Kunststoffschnipsel vermieden. Vielmehr wird durch die Abrundung und die horizontale Scheitelfläche sichergestellt, dass die Kunststoffschnipsel im ungefalteten flachen Zustand zwischen die Reinigungsscheiben gezogen und dort gereinigt werden.

Es kann vorgesehen sein, dass zwischen den Scheitelflächen der Reinigungsrippen der ersten Reinigungsfläche und den Scheitelflächen der Reinigungsrippen der zweiten Reinigungsfläche ein Abstand besteht, der im Wesentlichen der durchschnittlichen Dicke der mittels der Zuführeinrichtung zugeführten Kunststoffschnipsel, insbesondere der Hauptkornklasse, entspricht. Der Abstand der Reinigungsscheiben und damit die Dicke des Reinigungsspalts werden also an die Dicke der durchschnittlich zu erwarteten Kunststoffschnipsel angepasst. Der Abstand der Scheiben sollte möglichst so eingestellt werden, dass nur einzelne Kunststoffschnipsel zwischen die Scheiben passen. Dadurch wird eine optimale Reinigung durch Anschleifen der Ober- und Unterseiten der Kunststoffschnipsel erreicht. Hierzu wiederum ist es von Vorteil, wenn die zu reinigenden Kunststoffschnipsel eine möglichst geringe Dickenstreuung aufweisen. Falls eine Dickenstreuung vorhanden ist, kann die Höhe der Reinigungsstege so gewählt werden, dass im Betriebszustand der Reinigungsscheiben der Abstand zwischen gegenüberliegenden Reinigungsstegen der durchschnittlichen Dicke der dicksten Kunststoffschnipsel entspricht. Das Erreichen der jeweils optimalen Grenzdicke des Reinigungsspalts kann an der Leistungsaufnahme der Antriebseinrichtung festgestellt werden. Ein Unterschreiten der Grenzdicke führt zu einem sprunghaften Anstieg der Leistungsaufnahme. Beispielhaft genannt sei für die Aufbereitung von PET-Flaschen aus Einwegssystemen ein Reinigungsspalt von 0,25 mm, bei der Aufbereitung von PET-Mehrwegflaschen (dickere Wandung) ein Reinigungsspalt von 0,50 mm und bei der Aufbereitung von Folienschnipseln ein Reinigungsspalt von 0,1 mm. Der jeweils geeignete Abstand muss abhängig von dem Material ermittelt und angepasst werden.

Grundsätzlich kann die erste und/oder zweite Reinigungsscheibe einteilig ausgebildet sein oder aus mehreren Reinigungsscheibensegmenten bestehen. Die Vorrichtung kann weiterhin eine Flüssigkeitszuführeinrichtung aufweisen, mit der Flüssigkeit, insbesondere Wasser oder eine wässrige Lösung, in den Reinigungsspalt zuführbar ist. Die Flüssigkeitszufuhr dient zum Fördern der Kunststoffschnipsel durch den Reinigungsspalt und zum Abführen des im Zuge des Reinigungsprozesses entstehenden Abriebs. Durch die erfindungsgemäße Geometrie der Reinigungsscheiben wird ein hydrodynamischer Prozess erzeugt. Es entstehen Turbulenzen der Wasserströmung, die wiederum zu sehr hohen Fließgeschwindigkeiten der Flüssigkeit durch den Reinigungsspalt führen. Es kommt zu einem starken Anpressen der zu reinigenden Kunststoffschnipsel an die Reinigungsrippen, insbesondere die geneigten bzw. gekrümmten Flanken und die Scheitelflächen. Die Reinigung der Kunststoffschnipsel wird hierdurch verbessert. Bei der erfindungsgemäßen Vorrichtung ist keine Mindestfeststoffkonzentration (Verhältnis Feststoffmenge, insbesondere Kunststoffschnipselmenge, zu Flüssigkeitsmenge) vorgegeben. Auch geringe Feststoffkonzentrationen sind mit der erfindungsgemäßen Vorrichtung darstellbar. Insbesondere können Feststoffkonzentrationen von weniger als 10% zum Einsatz kommen. Die maximale Feststoffkonzentration ist abhängig von dem Grad der Verschmutzung bzw. der maximalen Verarbeitungskapazität der verwendeten Reinigungsscheibe. Die maximale Feststoffkonzentration kann durch Verwendung größerer Reinigungsscheiben erhöht werden. Die verwendete Flüssigkeitsmenge wird an den Verschmutzungsgrad der zu reinigenden Kunststoffschnipsel und die im Prozess erzeugte Wärme angepasst.

Die Reinigungsstege der ersten und zweiten Reinigungsscheibe können so angeordnet sein, dass sie bei einer Drehung der mindestens einen Reinigungsscheibe nicht oder nicht dauerhaft in einander direkt gegenüberliegende Positionen gelangen. Weiterhin können die Reinigungsstege auf der ersten und zweiten Reinigungsfläche jeweils entlang mehrerer kreisförmiger Bahnen um das Zentrum der jeweiligen Reinigungsscheibe oder der jeweiligen Reinigungsfläche angeordnet sein. Die kreisförmigen Bahnen der Reinigungsstege auf der ersten Reinigungsfläche können dabei andere Radien besitzen als die kreisförmigen Bahnen der Reinigungsstege auf der zweiten Reinigungsfläche. Weiterhin kann vorgesehen sein, dass die Reinigungsstege entlang der kreisförmigen Bahn jeweils zwischen jedem Paar von benachbarten Reinigungsrippen angeordnet sind. Die kreisförmigen Bahnen auf einer Reinigungsscheibe sind insbesondere konzentrisch zueinander. Das Zentrum der Reinigungsfläche kann identisch zu dem Zentrum der Reinigungsscheibe sein. Wie erläutert, kann die Reinigungsfläche zum Beispiel kreisringförmig sein, während die Reinigungsscheibe zum Beispiel (hohl-) zylindrisch sein kann. Unterschiedliche Radien der kreisförmigen Bahnen auf der ersten und zweiten Reinigungsscheibe stellen sicher, dass sich die Reinigungsstege im Zuge der Relativdrehung der Reinigungsscheiben nicht direkt gegenüber liegen. Hierdurch wird die mechanische Beanspruchung der Kunststoffschnipsel verringert. Die Reinigungsscheiben können also unterschiedlich zueinander ausgestaltet sein. Sie können allerdings an ihrem äußeren und/oder ihrem inneren Rand jeweils direkt gegenüberliegend eine Kreisbahn mit Reinigungsstegen mit identischem Radius besitzen.

Alternativ ist es auch möglich, dass die Reinigungsflächen der oberen und unteren Reinigungsscheibe identisch zueinander ausgebildet sind. Dabei können zumindest einige der kreisförmigen Bahnen auf der ersten Reinigungsfläche und der kreisförmigen Bahnen auf der zweiten Reinigungsfläche den gleichen Radius besitzen, wobei zumindest die Reinigungsstege entlang kreisförmiger Bahnen mit gleichem Radius jeweils nur zwischen jedem zweiten Paar von benachbarten Reinigungsrippen angeordnet sind. Es können dabei insbesondere sämtliche der kreisförmigen Bahnen auf der ersten Reinigungsfläche und der kreisförmigen Bahnen auf der zweiten Reinigungsfläche den gleichen Radius besitzen und weiterhin insbesondere die Reinigungsstege entlang kreisförmiger Bahnen mit gleichem Radius jeweils nur zwischen jedem zweiten Paar von benachbarten Reinigungsrippen angeordnet sein. Hierbei ist also eine alternierende Anordnung vorgesehen, wobei die Reinigungsstege nur in jedem zweiten Kanal zwischen benachbarten Reinigungsrippen vorgesehen sind. Es kommt bei der Relativdrehung der Reinigungsscheiben zueinander also zu einem direkten Gegenüberliegen von Reinigungsstegen während 50% der Bearbeitungszeit. Während diese Ausgestaltung Vorteile hinsichtlich der Herstellungskosten der Reinigungsscheiben besitzt, führt sie allerdings zu einer höheren Beanspruchung der Kunststoffschnipsel. Sie ist insbesondere bei sehr dünnen Kunststoffschnipseln (Kunststofffolienschnipseln) dennoch gut geeignet.

Ein Ausführungsbeispiel der Erfindung wird nachfolgend anhand von Figuren näher erläutert. Es zeigen schematisch:
- Figur 1: eine Reinigungsscheibe einer erfindungsgemäß verwendeten Vorrichtung in einer Ansicht von oben,
- Figur 2: einen vergrößerten Ausschnitt der Reinigungsscheibe aus Figur 1 in einer Ansicht von oben,
- Figur 3: einen vergrößerten Ausschnitt der Reinigungsscheibe aus Figur 1 in einer perspektivischen Ansicht,
- Figur 4: einen Ausschnitt einer ersten und einer zweiten Reinigungsscheibe einer erfindungsgemäß verwendeten Vorrichtung in einer perspektivischen Ansicht,
- Figur 5: einen Teil einer Schnittansicht der Reinigungsscheibe aus Figur 1 in Radialrichtung,
- Figur 6: einen Teil einer Schnittansicht in einer Umlaufrichtung um das Zentrum der Reinigungsscheiben in Figur 4,
- Figur 7: die Ansicht aus Figur 6 in einem ersten Betriebszustand,
- Figur 8: die Ansicht aus Figur 6 in einem zweiten Betriebszustand, und
- Figur 9: die Ansicht aus Figur 6 in einem dritten Betriebszustand.

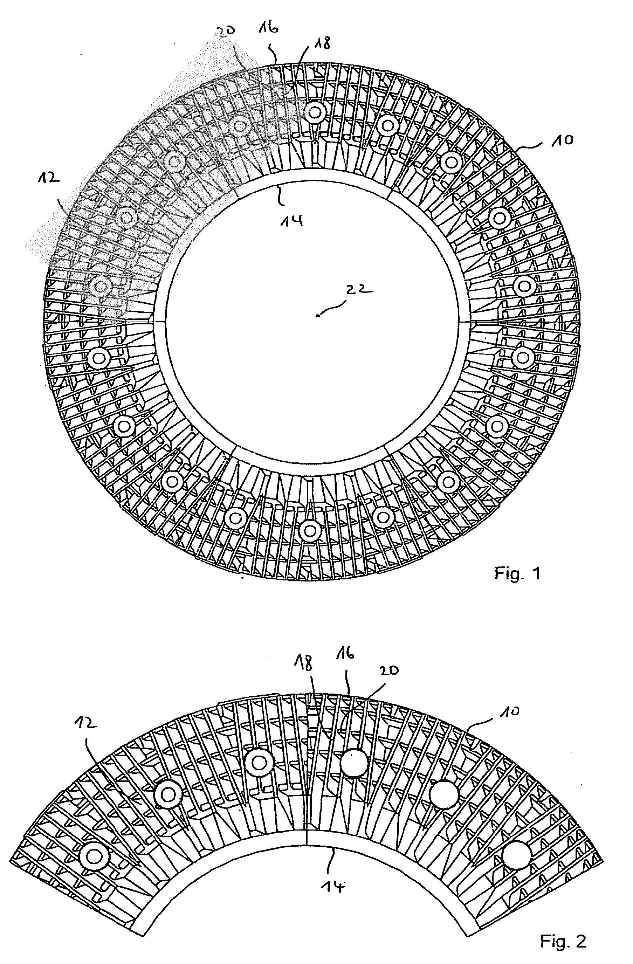

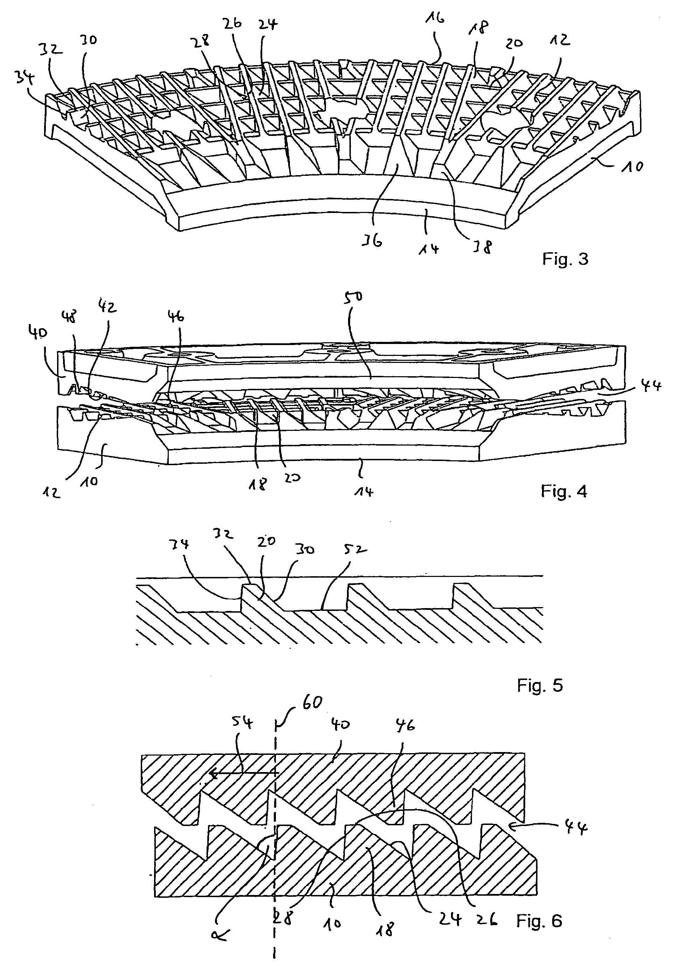

Soweit nichts anderes angegeben ist, bezeichnen in den Figuren gleiche Bezugszeichen gleiche Gegenstände. In Figur 1 ist eine untere Reinigungsscheibe 10 einer erfindungsgemäß verwendeten Vorrichtung in einer Ansicht von oben gezeigt. Die Reinigungsscheibe 10 besitzt eine hohlzylindrische Grundform und eine kreisringförmige Reinigungsfläche 12. In dem gezeigten Beispiel ist die Reinigungsscheibe 10 aus mehreren Reinigungsscheibensegmenten zusammengesetzt. Auf der Reinigungsfläche 12 ist eine Vielzahl von sich zwischen dem inneren Rand 14 und dem äußeren Rand 16 der Reinigungsfläche erstreckenden Reinigungsrippen 18 angeordnet. Es ist zu erkennen, dass die Reinigungsrippen 18 eines Reinigungsscheibensegments im Wesentlichen parallel zueinander angeordnet sind. Insgesamt verlaufen die Reinigungsrippen 18 in radialer Richtung der Reinigungsscheibe oder in einem geringen Winkel zur radialen Richtung. In dem gezeigten Beispiel sind zwischen sämtlichen zueinander benachbarten Reinigungsrippen 18 jeweils mehrere sich quer zur Erstreckungsrichtung der Reinigungsrippen erstreckende Reinigungsstege 20 angeordnet. Die Reinigungsstege 20 sind entlang mehrerer, in dem gezeigten Beispiel fünf konzentrischer kreisförmiger Bahnen um das Zentrum der Reinigungsscheibe 10 bzw. der Reinigungsfläche 12 angeordnet. Der Aufbau der Reinigungsrippen 18 und der Reinigungsstege 20 ist in Figur 3 zu erkennen. Insbesondere ist in Figur 3 zu erkennen, dass die Reinigungsrippen 18 jeweils eine gegenüber der in Figur 1 bei dem Bezugszeichen 22 gezeigten Rotationsachse der Reinigungsscheibe 10 geneigte erste Flanke 24 besitzen. Die erste Flanke 24 mündet in eine horizontale Scheitelfläche 26. Die horizontale Scheitelfläche 26 mündet wiederum in eine zweite Flanke 28 der Reinigungsrippen 18, die in dem gezeigten Beispiel in einer vertikalen Ebene liegt, also gegenüber der Rotationsachse 22 der Reinigungsscheibe 10 nicht geneigt ist. Außerdem ist in Figur 3 zu erkennen, dass die Reinigungsstege 20 in radialer Richtung gesehen jeweils eine rampenartig ansteigende Fläche 30 besitzen, die in eine ebenfalls horizontale Scheitelfläche 32 mündet. Die der Fläche 30 gegenüberliegende Fläche 34 der Reinigungsstege ist wiederum in einer nahezu vertikalen Ebene angeordnet. Schließlich ist in Figur 3 zu erkennen, dass die Höhe der Reinigungsstege 20, insbesondere ihrer Scheitelflächen 32, geringer ist als die Höhe der Reinigungsrippen 18, insbesondere ihrer Scheitelflächen 26. Abhängig von der segmentartigen Ausbildung der Reinigungsscheibe 10 besitzen die Reinigungsrippen abwechselnd einen ausgehend von dem inneren Rand 14 der Reinigungsscheibe 10 sanft ansteigenden Beginn 36 oder einen steil ansteigenden Beginn 38.

In Figur 4 ist die in den Figuren 1 bis 3 gezeigte untere Reinigungsscheibe 10 ausschnittsweise in einer Betriebsposition mit einer oberen Reinigungsscheibe 40 dargestellt. Die obere Reinigungsscheibe 40 entspricht in ihrer Ausgestaltung weitgehend der Ausgestaltung der unteren Reinigungsscheibe 10. So ist auch die obere Reinigungsscheibe 40 mit einer hohlzylindrischen Grundform gebildet und besitzt eine kreisringförmige Reinigungsfläche 42. Zwischen den Reinigungsflächen 12 und 42 der unteren und oberen Reinigungsscheibe 10, 40 ist entsprechend ein Reinigungsspalt 44 gebildet. Die Reinigungsfläche 42 der oberen Reinigungsscheibe 40 ist ebenfalls großenteils identisch zu der Reinigungsfläche 12 der unteren Reinigungsscheibe 10 ausgebildet. Insbesondere besitzt auch die obere Reinigungsfläche 42 identisch zu den Reinigungsrippen 18 der unteren Reinigungsscheibe 10 ausgebildete Reinigungsrippen 46. Darüber hinaus besitzt auch die obere Reinigungsscheibe 40 zwischen sämtlichen zueinander benachbarten Reinigungsrippen 46 jeweils mehrere Reinigungsstege 48, die wiederum entlang mehrerer konzentrischer Kreisbahnen um das Zentrum der oberen Reinigungsscheibe 40 angeordnet sind. Allerdings unterscheiden sich die Radien der konzentrischen Kreisbahnen der oberen Reinigungsscheibe 40 von den Radien der konzentrischen Kreisbahnen der unteren Reinigungsscheibe 10, so dass bei einer Relativdrehung zwischen den Reinigungsscheiben 10, 40 im Betrieb die Reinigungsstege 20, 48 nicht in eine einander direkt gegenüberliegende Position gelangen. Lediglich an ihrem äußeren Rand ist jeweils eine Kreisbahn mit Reinigungsstegen 20 bzw. 48 der oberen und unteren Reinigungsscheibe 10 bzw. 40 vorgesehen, die einander im Betrieb direkt gegenüber liegen und den äußeren Abschluss der jeweiligen Reinigungsflächen 12, 42 bilden. Die in Figur 4 gezeigte Vorrichtung umfasst weiterhin eine nicht dargestellte Antriebseinrichtung, mit der beispielsweise die obere Reinigungsscheibe 40 um ihre Rotationsachse gedreht werden kann. Weiterhin umfasst die Vorrichtung eine Kunststoffzuführeinrichtung (ebenfalls nicht dargestellt), mit der zu reinigende Kunststoffschnipsel zentral, also über den inneren Rand 14 bzw. 50 der Reinigungsscheiben 10, 40 in den Reinigungsspalt 44 zugeführt werden. Schließlich umfasst die Vorrichtung eine ebenfalls nicht dargestellte Flüssigkeitszuführeinrichtung, mit der in dem gezeigten Beispiel Wasser ebenfalls zentral über den inneren Rand 14 bzw. 50 der Reinigungsscheiben 10, 40 in den Reinigungsspalt 44 geleitet wird.

In der Schnittansicht in radialer Richtung nach Figur 5 ist die geometrische Ausbildung der Reinigungsstege 20 der in dem gezeigten Beispiel unteren Reinigungsscheibe 10 zu erkennen. Insbesondere sind dabei die rampenartig ansteigende Fläche 30, die Scheitelfläche 32 und die vertikale Fläche 34 gut zu erkennen. Weiterhin ist zu erkennen, dass zwischen in radialer Richtung hintereinander angeordneten Reinigungsstegen 20 jeweils eine horizontale Bodenfläche 52 ausgebildet ist. Die Reinigungsstege 48 der oberen Reinigungsscheibe 40 sind insoweit identisch ausgebildet.

Figur 6 zeigt einen Schnitt der Vorrichtung aus Figur 4 in einer Umlaufrichtung um die Rotationsachse 22 der Reinigungsscheibe 10 bzw. um die koaxial verlaufende Rotationsachse der oberen Reinigungsscheibe 40. Zu erkennen ist wiederum die zu den Rotationsachsen der unteren und oberen Reinigungsscheibe 10, 40 geneigte erste Flanke 24 der Reinigungsrippen 18 der unteren Reinigungsscheibe 10. Weiterhin ist jeweils die horizontale Scheitelfläche 26 und die vertikale zweite Flanke 28 der Reinigungsrippen 18 der unteren Reinigungsscheibe 10 zu erkennen. Weiterhin ist in Figur 6 zu erkennen, dass die Reinigungsrippen 18 unmittelbar hintereinander angeordnet sind, so dass sie in der Schnittansicht in Figur 6 ein Sägezahnprofil ergeben. Schließlich ist zu erkennen, dass die Reinigungsrippen 46 der oberen Reinigungsscheibe 40 insoweit identisch zu den Reinigungsrippen 18 der unteren Reinigungsscheibe 10 ausgebildet sind. Die Drehrichtung der oberen Reinigungsscheibe 40 im Zuge der Rotation durch die Antriebseinrichtung ist in Figur 6 durch den Pfeil 54 veranschaulicht. Zu erkennen ist, dass die gegenüber der Rotationsachse der oberen bzw. unteren Reinigungsscheibe 10, 40 geneigten Flanken der Reinigungsrippen 18, 46 die bei einer Drehung der oberen Reinigungsscheibe 40 jeweils vorlaufenden Flanken sind. Zu erwähnen ist außerdem, dass die geneigten Flanken der Reinigungsrippen 18, 46 jeweils einen Winkel a zu der in Figur 6 bei dem Bezugszeichen 60 dargestellten Axialrichtung der Reinigungsscheiben 10, 40 von mehr als 45° besitzen. Hierdurch steht eine vergleichsweise große Abriebfläche auf den geneigten Flanken zur Verfügung, wodurch der Reinigungseffekt verbessert wird. Die Axialrichtung 60 verläuft parallel zu der Rotationsachse 22 der Reinigungsscheibe 10.

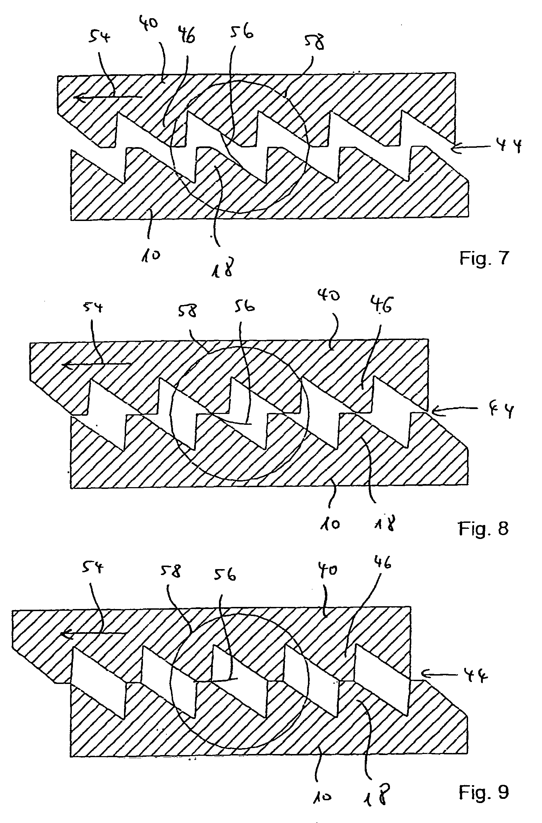

Ausgehend von der Darstellung der Figur 6 soll anhand der Figuren 7 bis 9 die Reinigung eines Kunststoffschnipsels 56, insbesondere eines Kunststoffflakes 56, veranschaulicht werden. Figur 7 zeigt die Relativposition der Reinigungsscheiben 10, 40 zueinander, wie sie in Figur 6 gezeigt ist. Der Kunststoffflake 56 befindet sich innerhalb des in den Figuren 7 bis 9 aus Veranschaulichungsgründen gezeigten Kreises 58. In Figur 7 befindet sich der Kunststoffflake 56 in einer leicht geknickten bzw. gebogenen Form in einem Freiraum zwischen gegenüberliegenden Reinigungsrippen 18, 46. Im Zuge der Drehbewegung der oberen Reinigungsscheibe 40 entlang des Pfeils 54 gelangt der Kunststoffflake 56 anschließend zwischen die Scheitelflächen der Reinigungsrippen 18, 48, wie dies in den Figuren 8 und 9 gezeigt ist. Dabei kommt es zu einem Recken des Kunststoffflakes 56 sowie einem abrasiven Kontakt mit den gekrümmten Flanken und den Scheitelflächen der beteiligten Reinigungsrippen 18, 46. Hierbei wiederum kommt es zu einem Abrieb von auf den Oberflächen des Kunststoffflakes 56 anhaftenden Verunreinigungen. Verstärkt wird dieser Effekt durch die aufgrund der Geometrie der Reinigungsscheiben 10, 40 bedingten sehr hohen Fließgeschwindigkeiten des durch den Reinigungsspalt 44 geleiteten Wassers.

Es kann dabei auch vorgesehen sein, dass die zu reinigenden Kunststoffschnipsel vor dem Zuführen zwischen die Reinigungsscheiben (10, 40) und dem Fördern durch den Reinigungsspalt (44) der für das Entfernen von Verunreinigungen eigentlich vorgesehenen Vorrichtung in einer nicht dargestellten Vorreinigungsvorrichtung einer Vorreinigung unterzogen werden, wie dies oben erläutert wurde.

## Patentansprüche

1. Verfahren zum Entfernen von Verunreinigungen auf Kunststoffschnipseln (56) unter Verwendung einer Vorrichtung, umfassend eine erste Reinigungsscheibe (10) mit einer ersten Reinigungsfläche (12) und eine zweite Reinigungsscheibe (40) mit einer zweiten Reinigungsfläche (42), wobei die Reinigungsflächen (12, 42) einander gegenüberliegen und zwischen sich einen Reinigungsspalt (44) begrenzen, weiter umfassend eine Antriebseinrichtung, mit der zumindest eine der Reinigungsscheiben (12, 42) um ihre Rotationsachse (22) drehbar ist und eine Zuführeinrichtung, mit der Kunststoffschnipsel (56) zwischen die Reinigungsscheiben (10, 40) zuführbar sind, wobei die Reinigungsflächen (12, 42) der Reinigungsscheiben (10, 40) jeweils eine Mehrzahl von sich zwischen einem inneren und einem äußeren Rand (14, 16) der Reinigungsflächen (12, 42) erstreckenden Reinigungsrippen (18, 46) aufweisen, wobei zumindest eine Flanke (24, 28) der Reinigungsrippen (18, 46) gegenüber der Axialrichtung der jeweiligen Reinigungsscheibe (10, 40) geneigt oder gekrümmt ist, zwischen zumindest einigen zueinander benachbarten Reinigungsrippen (18, 46) mehrere quer zur Erstreckungsrichtung der Reinigungsrippen (18, 46) verlaufende Reinigungsstege (20, 48) angeordnet sind, die Reinigungsstege (20, 48) der ersten und/oder zweiten Reinigungsscheibe (10, 40) in radialer Richtung der Reinigungsscheiben (10, 40) jeweils rampenartig ansteigen und die Reinigungsstege (20, 48) der ersten Reinigungsscheibe (10, 40) eine geringere Höhe besitzen als die Reinigungsrippen (18, 46) der ersten Reinigungsscheibe (10) und/oder dass die Reinigungsstege (20, 48) der zweiten Reinigungsscheibe (48) eine geringere Höhe besitzen als die Reinigungsrippen (18, 46) der zweiten Reinigungsscheibe (48), wobei bei dem Verfahren mindestens eine Reinigungsscheibe (10, 40) mittels der Antriebseinrichtung um ihre Rotationsachse (22) drehend angetrieben wird, bei dem mittels der Flüssigkeitszuführeinrichtung Flüssigkeit, insbesondere Wasser oder eine wässrige Lösung, in den Reinigungsspalt (44) zugeführt wird, bei dem mittels der Zuführeinrichtung Kunststoffschnipsel (56) in den Reinigungsspalt (44) zugeführt werden und bei dem die Kunststoffschnipsel (56) durch den Reinigungsspalt (44) gefördert werden.

2. Verfahren nach Anspruch 1, **dadurch gekennzeichnet, dass** zu reinigende Kunststoffschnipsel vor dem Zuführen zwischen die Reinigungsscheiben (10, 40) und dem Fördern durch den Reinigungsspalt (44) der Vorrichtung in einer Vorreinigungsvorrichtung einer Vorreinigung unterzogen werden, wobei die Vorreinigungsvorrichtung eine erste Reinigungsscheibe mit einer ersten Reinigungsfläche und eine zweite Reinigungsscheibe mit einer zweiten Reinigungsfläche umfasst, wobei die Reinigungsflächen einander gegenüberliegen und zwischen sich einen Reinigungsspalt begrenzen, der größer ist als der Reinigungsspalt (44) der anschließend zum Entfernen von Verunreinigungen auf den Kunststoffschnipseln verwendeten Vorrichtung.

3. Verfahren nach Anspruch 2, **dadurch gekennzeichnet, dass** der Reinigungsspalt der Vorreinigungsvorrichtung durch Einstellung des Abstands der Reinigungsscheiben so gewählt wird, dass im Zuge der Vorreinigung von den Kunststoffschnipseln entfernte Verunreinigungen im Wesentlichen nicht zerstört werden.

4. Verfahren nach Anspruch 1, **dadurch gekennzeichnet, dass** zu reinigende Kunststoffschnipsel vor dem Zuführen zwischen die Reinigungsscheiben (10, 40) und dem Fördern durch den Reinigungsspalt (44) der Vorrichtung in einer Vorreinigungsvorrichtung einer Vorreinigung unterzogen werden, wobei die Vorreinigungsvorrichtung einen Reinigungshohlzylinder mit einer ersten Reinigungsfläche an seiner zylindrischen Innenfläche und einen in dem Reinigungshohlzylinder angeordneten Reinigungszylinder mit einer zweiten Reinigungsfläche an seiner zylindrischen Außenfläche umfasst, wobei die Reinigungsflächen zwischen sich einen Reinigungsspalt begrenzen, der größer ist als der Reinigungsspalt (44) der anschließend zum Entfernen von Verunreinigungen auf den Kunststoffschnipseln verwendeten Vorrichtung.

5. Verfahren nach Anspruch 4, **dadurch gekennzeichnet, dass** der Reinigungsspalt der Vorreinigungsvorrichtung durch Einstellung des Abstands zwischen dem Reinigungshohlzylinder und dem Reinigungszylinder so gewählt wird, dass im Zuge der Vorreinigung von den Kunststoffschnipseln entfernte Verunreinigungen im Wesentlichen nicht zerstört werden.

6. Verfahren nach Anspruch 1, **dadurch gekennzeichnet, dass** zu reinigende Kunststoffschnipsel vor dem Zuführen zwischen die Reinigungsscheiben (10, 40) und dem Fördern durch den Reinigungsspalt (44) der Vorrichtung in einer Vorreinigungsvorrichtung einer Vorreinigung unterzogen werden, wobei die Vorreinigungsvorrichtung einen Reinigungshohlkegel mit einer ersten Reinigungsfläche an seiner kegelförmigen Innenfläche und einen in dem Reinigungshohlkegel angeordneten Reinigungskegel mit einer zweiten Reinigungsfläche an seiner kegelförmigen Außenfläche umfasst, wobei die Reinigungsflächen zwischen sich einen Reinigungsspalt begrenzen, der größer ist als der Reinigungsspalt (44) der anschließend zum Entfernen von Verunreinigungen auf den Kunststoffschnipseln verwendeten Vorrichtung.

7. Verfahren nach Anspruch 6, **dadurch gekennzeichnet, dass** der Reinigungsspalt der Vorreinigungsvorrichtung durch Einstellung des Abstands zwischen dem Reinigungshohlkegel und dem Reinigungskegel so gewählt wird, dass im Zuge der Vorreinigung von den Kunststoffschnipseln entfernte Verunreinigungen im Wesentlichen nicht zerstört werden.

8. Verfahren nach einem der Ansprüche 3, 5 oder 7, **dadurch gekennzeichnet, dass** die entfernten Verunreinigungen anschließend mittels Filtration und/oder Siebung aus der Prozessflüssigkeit entfernt werden.

## Claims

1. A method for removing impurities from shredded plastic (56) using an apparatus, comprising a first cleaning disk (10) with a first cleaning surface (12) and a second cleaning disk (40) with a second cleaning surface (42), wherein the cleaning surfaces (12, 42) lie opposite each other and define amongst each other a cleaning gap (44), further comprising a drive device, with which at least one of the cleaning disks (12, 42) is rotatable around its rotational axis (22) and a feeding device, with which the shredded plastic (56) can be fed between the cleaning disks (10, 40), wherein the cleaning surfaces (12, 42) of the cleaning disks (10, 40) each have a plurality of cleanings ribs (18, 46) extending between an inner and an outer edge (14, 16) of the cleaning surfaces (12, 42), wherein at least one flank (24, 28) of the cleaning ribs (18, 46) is tilted or bent with respect to the axial direction of the respective cleaning disk (10, 40), several cleaning webs (20, 48) progressing transversely to the extension direction of the cleaning ribs (18, 46) are arranged between at least some of the adjacent cleaning ribs (18, 46), the cleaning webs (20, 48) of the first and/or second cleaning disk (10, 40) each rise in a ramp-like manner in the radial direction of the cleaning disks (10, 40) and the cleaning webs (20, 48) of the first cleaning disk (10, 40) have a lower height than the cleaning ribs (18, 46) of the first cleaning disk (10) and/or that the cleaning webs (20, 48) of the second cleaning disk (48) have a lower height than the cleaning ribs (18, 46) of the second cleanings disk (48), wherein, in the case of the method, at least one cleaning disk (10, 40) is rotated around its rotational axis (22) by means of the drive device, in which liquid, in particular water or an aqueous solution, is fed into the cleaning gap (44) by means of the liquid feeding device, in which shredded plastic (56) is fed into the cleaning gap (44) by means of the feeding device and in which the shredded plastic (56) is conveyed through the cleaning gap (44).

2. The method according to claim 1, **characterized in that** shredded plastic to be cleaned undergoes a precleaning in a precleaning apparatus before being fed between the cleaning disks (10, 40) and before being conveyed through the cleaning gap (44) of the apparatus, wherein the precleaning apparatus comprises a first cleaning disk with a first cleaning surface and a second cleaning disk with a second cleaning surface, wherein the cleaning surfaces lie opposite each other and define amongst each other a cleaning gap, which is larger than the cleaning gap (44) of the apparatus used subsequent to the removal of impurities on the shredded plastic.

3. The method according to claim 2, **characterized in that** the cleaning gap of the precleaning apparatus is selected through the adjustment of the distance between the cleaning disks such that, in the course of the precleaning of the shredded plastic, removed impurities are mainly not destroyed.

4. The method according to claim 1, **characterized in that** shredded plastic to be cleaned undergoes a precleaning in a precleaning apparatus before being fed between the cleaning disks (10, 40) and before being conveyed through the cleaning gap (44) of the apparatus, wherein the precleaning apparatus comprises a hollow cleaning cylinder with a first cleaning surface on its cylindrical inner surface and a cleaning cylinder arranged in the hollow cleaning cylinder with a second cleaning surface on its cylindrical outer surface, wherein the cleaning surfaces define amongst each other a cleaning gap, which is larger than the cleaning gap (44) of the apparatus used subsequent to the removal of impurities on the shredded plastic.

5. The method according to claim 4, **characterized in that** the cleaning gap of the precleaning apparatus is selected through the adjustment of the distance between the hollow cleaning cylinder and the cleaning cylinder such that, in the course of the precleaning of the shredded plastic, removed impurities are mainly not destroyed.

6. The method according to claim 1, **characterized in that** the shredded plastic to be cleaned undergoes a precleaning in a precleaning apparatus before being fed between the cleaning disks (10, 40) and before being conveyed through the cleaning gap (44) of the apparatus, wherein the precleaning apparatus comprises a hollow cleaning cone with a first cleaning surface on its conical inner surface and a cleaning cone arranged in the hollow cleaning cone with a second cleaning surface on its conical outer surface, wherein the cleaning surfaces define amongst each other a cleaning gap, which is larger than the cleaning gap (44) of the apparatus used subsequent to the removal of impurities on the shredded plastic.

7. The method according to claim 6, **characterized in that** the cleaning gap of the precleaning apparatus is selected through the adjustment of the distance between the hollow cleaning cone and the cleaning cylinder such that, in the course of the precleaning of the shredded plastic, removed impurities are mainly not destroyed.

8. The method according to one of claims 3, 5 or 7, **characterized in that** the removed impurities are subsequently removed from the process fluid by means of filtration and/or sieving.

## Revendications

1. Procédé de suppression d'impuretés présentes sur des copeaux de matière plastique (56) à l'aide d'un dispositif, comprenant un premier disque de nettoyage (10) avec une première surface de nettoyage (12) et un deuxième disque de nettoyage (40) avec une deuxième surface de nettoyage (42), dans lequel les surfaces de nettoyage (12, 42) sont positionnées l'une en face de l'autre et délimitent entre elle une fente de nettoyage (44), comprenant en outre un dispositif d'entraînement avec lequel au moins un des disques de nettoyage (12, 42) peut être mis en rotation autour de son axe de rotation (22) et un dispositif d'alimentation avec lequel des copeaux de matière plastique (56) peuvent être alimentés entre les disques de nettoyage (10, 40), dans lequel les surfaces de nettoyage (12, 42) des disques de nettoyage (10, 40) présentent respectivement une pluralité de nervures de nettoyage (18, 46) s'étendant entre un bord intérieur et un bord extérieur (14, 16) des surfaces de nettoyage (12, 42), dans lequel au moins un flanc (24, 28) des nervures de nettoyage (18, 46) est incliné ou incurvé par rapport au sens axial du disque de nettoyage (10, 40) respectif, une pluralité de nervures de nettoyage (20, 48) courant transversalement par rapport à la direction d'extension des nervures de nettoyage (18, 46) sont disposées entre au moins quelques nervures de nettoyage (18, 46) adjacentes l'une par rapport à l'autre, les nervures de nettoyage (20, 48) du premier et/ou deuxième disque de nettoyage (10, 40) montent respectivement en rampe dans le sens radial des disques de nettoyage (10, 40) et les nervures de nettoyage (20, 48) du premier disque de nettoyage (10, 40) ont une hauteur inférieure à celle des nervures de nettoyage (18, 46) du premier disque de nettoyage (10) et/ou les nervures de nettoyage (20, 48) du deuxième disque de nettoyage (48) ont une hauteur inférieure à celle des nervures de nettoyage (18, 46) du deuxième disque de nettoyage (48), dans lequel, pour le procédé, au moins un disque de nettoyage (10, 40) est entraîné en rotation autour de son axe de rotation (22) au moyen du dispositif d'entraînement, dans lequel un liquide, en particulier de l'eau ou une solution aqueuse, est alimenté dans la fente de nettoyage (44) au moyen du dispositif d'alimentation en liquide, dans lequel des copeaux de matière plastique (56) sont alimentés dans la fente de nettoyage (44) au moyen du dispositif d'alimentation dans lequel les copeaux de matière plastique (56) sont transportés à travers la fente de nettoyage (44).

2. Procédé selon la revendication 1, **caractérisé en ce que** des copeaux de matière plastique à nettoyer sont soumis avant l'alimentation entre les disques de nettoyage (10, 40) et le transport à travers la fente de nettoyage (44) du dispositif à un prénettoyage dans un dispositif de prénettoyage, dans lequel le dispositif de prénettoyage comprend un premier disque de nettoyage avec une première surface de nettoyage et un deuxième disque de nettoyage avec une deuxième surface de nettoyage, dans lequel les surfaces de nettoyage sont positionnées l'une en face de l'autre et délimitent entre elles une fente de nettoyage plus grande que la fente de nettoyage (44) du dispositif ensuite utilisé pour la suppression des impuretés présentes sur les copeaux de matière plastique.

3. Procédé selon la revendication 2, **caractérisé en ce que** la fente de nettoyage du dispositif de prénettoyage est sélectionnée par réglage de la distance entre les disques de nettoyage de manière à ce que, dans le cadre du prénettoyage, les impuretés supprimées des copeaux de matière plastique ne soient essentiellement pas détruites.

4. Procédé selon la revendication 1, **caractérisé en ce que** des copeaux de matière plastique à nettoyer sont soumis avant l'alimentation entre les disques de nettoyage (10, 40) et le transport à travers la fente de nettoyage (44) du dispositif à un prénettoyage dans un dispositif de prénettoyage, dans lequel le dispositif de prénettoyage comprend un cylindre creux de nettoyage avec une première surface de nettoyage sur sa face intérieure cylindrique et un cylindre de nettoyage disposé dans le cylindre creux de nettoyage avec une deuxième surface de nettoyage sur sa face extérieure cylindrique, dans lequel les surfaces de nettoyage délimitent entre elles une fente de nettoyage plus grande que la fente de nettoyage (44) du dispositif ensuite utilisé pour la suppression des impuretés présentes sur les copeaux de matière plastique.

5. Procédé selon la revendication 4, **caractérisé en ce que** la fente de nettoyage du dispositif de prénettoyage est sélectionnée par réglage de la distance entre le cylindre creux de nettoyage et le cylindre de nettoyage de manière à ce que, dans le cadre du prénettoyage, les impuretés supprimées des copeaux de matière plastique ne soient essentiellement pas détruites.

6. Procédé selon la revendication 1, **caractérisé en ce que** des copeaux de matière plastique à nettoyer sont soumis avant l'alimentation entre les disques de nettoyage (10, 40) et le transport à travers la fente de nettoyage (44) du dispositif à un prénettoyage dans un dispositif de prénettoyage, dans lequel le dispositif de prénettoyage comprend un cône creux de nettoyage avec une première surface de nettoyage sur sa face intérieure conique et un cône de nettoyage disposé dans le cône creux de nettoyage avec une deuxième surface de nettoyage sur sa face extérieure conique, dans lequel les surfaces de nettoyage délimitent entre elles une fente de nettoyage plus grande que la fente de nettoyage (44) du dispositif ensuite utilisé pour la suppression des impuretés présentes sur les copeaux de matière plastique.

7. Procédé selon la revendication 6, **caractérisé en ce que** la fente de nettoyage du dispositif de prénettoyage est sélectionnée par réglage de la distance entre le cône creux de nettoyage et le cône de nettoyage de manière à ce que, dans le cadre du prénettoyage, les impuretés supprimées des copeaux de matière plastique ne soient essentiellement pas détruites.

8. Procédé selon l'une quelconque des revendications 3, 5 ou 7, **caractérisé en ce que** les impuretés supprimées sont ensuite éliminées par filtration et/ou criblage du liquide de processus.
